# EUROPEAN PATENT APPLICATION

(11) **EP 1 278 291 A2**
(43) Date of publication of application: **22.01.2003**
(21) Application number: 02254926.5
(22) Date of filing: 12.07.2002
(51) Int. Cl.: H02K 11/00

(54) **Motor having winding overheat protection sensor**

(30) Priority: 17.07.2001 JP 2001216471
(71) Applicant: FANUC LTD, Minamitsuru-gun, Yamanashi 401-0597 (JP)
(72) Inventor: Yamamoto, Tomonaga, Yamanashi, 403-0005 (JP); Uematsu, Hidetoshi, Room 7-204, Minamitsuru-gun, Yamanashi, 401-0511 (JP)
(74) Representative: Billington, Lawrence Emlyn

(57) **Abstract**

A sensor holding member (7) made of resiliently deformable material is mounted to a bracket (4) that covers a stator winding (2). In addition, a sensor (3) for stator winding overheat protection is attached to a tip of the sensor holding member (7). The bracket (4), the sensor holding member (7), and the sensor (3) are formed into a one-body structure. When the bracket (4) is mounted to the stator (1), the sensor holding member (7) contracts under force caused by the sensor (3) being pressed against the stator winding (2). As a result, the sensor (3) is pressed against the stator winding (2) by resilient expansive force of the sensor holding member (7).

## Description

The present invention relates to a motor having a winding overheat protection sensor for detecting an overheat state of a stator winding of the motor, for use in protecting the winding and the motor from overheat.

It is known to equip a motor with a winding overheat protection sensor in order to protect the motor from overheat. The winding overheat protection sensor detects the temperature of a stator winding, which is a heat generating source. If an overheat state is detected, the winding overheat protection sensor activates an overheat protection circuit to protect the motor. As for such winding overheat protection sensors, one inserted between windings of the stator and one bonded to the surface of a stator winding are known as described in WO94/17580.

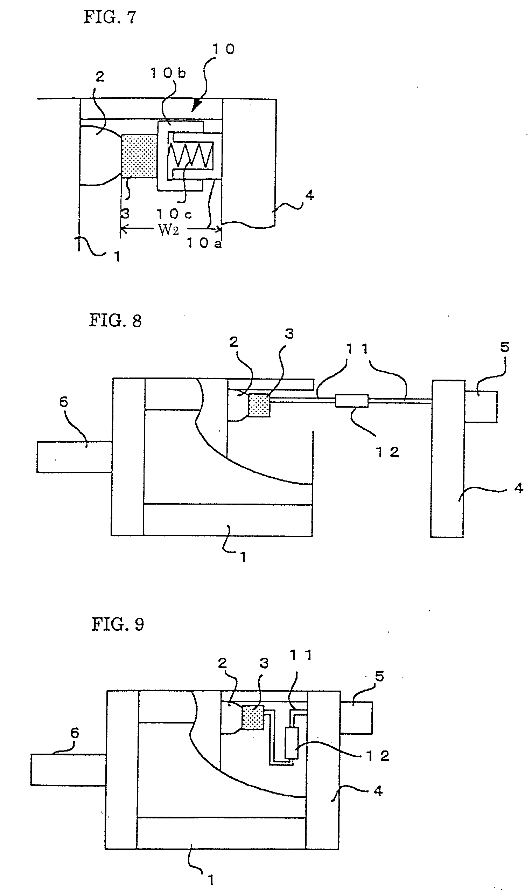

Figs. 8 and 9 are schematic diagrams of a previously-proposed example in which a winding overheat protection sensor is bonded to the surface of a stator winding in a stator of a motor. As shown in Fig. 8, a winding overheat protection sensor 3 for detecting the temperature of a stator winding 2 of a stator 1 is previously bonded to the stator winding 2. Furthermore, a connector 5 for taking out a signal supplied from the winding overheat protection sensor 3 is previously attached to a bracket 4 attached to the stator 1 in order to cover the stator winding 2. A lead wire 11 for conveying an output signal supplied from the winding overheat protection sensor 3 and a lead wire 11 connected to the connector 5 are connected together by using connection means 12 such as a pressure connection terminal or a connector. The lead wire 11 from the winding overheat protection sensor 3 is passed through a through-hole formed in the bracket 4 and led out to the outside of the motor, and an overheat protection circuit or the like (not illustrated) is connected to the tip of the lead wire 11. As shown in Fig. 9, the lead wire 11 and the connection means 12 are bent so as to be able to be housed in an inner space of the stator 1, and housed therein. Then the bracket 4 is mounted to the stator 1.

When the above-described attaching method of the winding overheat protection sensor is adopted, the assembling process of the motor is complicated and especially automatic assembling is difficult.

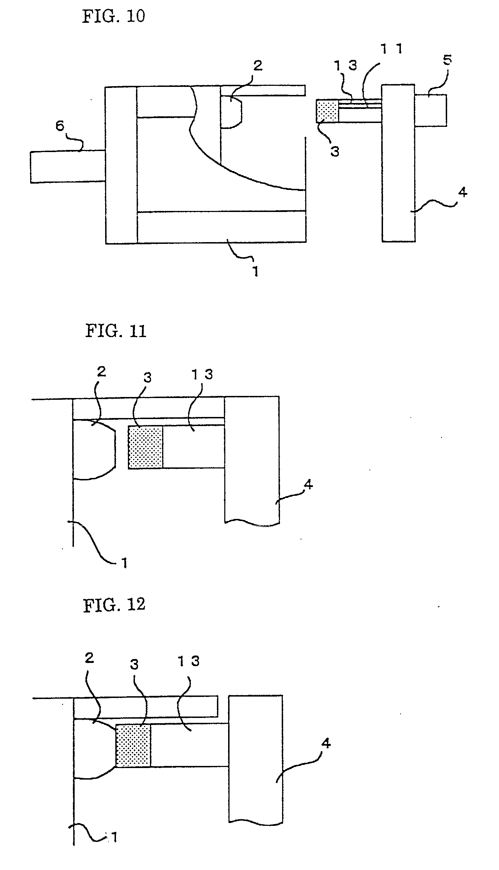

In an alternative method shown in Fig. 10, therefore, a connector 5 and a sensor holding member 13 of a rigid body are provided at the bracket 4, and a sensor 3 for winding overheat protection is attached to a tip of the sensor holding member 13. A lead wire 11 extending from the sensor 3 is connected to the connector 5. Thus the bracket 4, the sensor 3, the sensor holding member 13, and the connector 5 are formed as one module, i.e., one body. By providing the bracket 4 to the stator 1, the winding overheat protection sensor 3 is pressed against the surface of the stator winding 2.

When the dimension of the stator winding 2 is not stable, however, this method poses the following problems. When the bracket 4 is mounted to the stator 1, the sensor 3 cannot come into contact with the stator winding 2 in some cases as shown in Fig. 11. Alternatively, when the sensor 3 is in contact with the stator winding 2, the bracket cannot be completely attached to the stator 1 in some cases, as shown in Fig. 12.

An object of the present invention is to provide a motor having a winding overheat protection sensor, in which mounting of the winding overheat protection sensor is made more simple and automatic assembling also becomes possible.

In order to achieve the object, a motor having a winding overheat protection sensor according to the present invention includes a bracket mounted to a stator of the motor over a stator winding, a sensor holding member mounted to the bracket and comprising resiliently deformable material, and a sensor for stator winding overheat protection attached to a tip of the sensor holding member. In a state in which the bracket is mounted to the stator, the sensor for stator winding overheat protection is pressed against a surface of the stator winding.

Preferably, the bracket, the sensor holding member, and the sensor for stator winding overheat protection are formed into a module as one body.

Preferably, an adhesive layer is formed on a surface of the sensor for stator winding overheat protection pressed against the stator winding, and the sensor and the stator winding are pressed against and bonded to each other by the adhesive layer.

The sensor holding member may be formed of a spongy material or a hollow rubber member. Or the sensor holding member may be formed of a fixed section, and a movable section coupled to the fixed section via a resilient member including a spring.

When the bracket is mounted to the stator winding, the sensor for stator winding overheat protection is automatically pressed against the stator winding, and becomes capable of detecting the temperature. As a result, assembling the motor is facilitated and the assembling time also becomes short. In addition, automation of the assembling also becomes possible.

The foregoing and other features will become apparent from the following description of preferred embodiments of the invention with reference to the accompanying drawings, in which:
Fig. 1 is a schematic diagram of a motor having a winding overheat protection sensor according to the present invention;
Fig. 2 is a diagram showing a principal part of a first embodiment according to the present invention, in which a sensor holding member shown in Fig. 1 is formed of a spongy member, before a bracket is mounted to a stator;
Fig. 3 is a schematic diagram of a principal part showing a state in which the bracket of Fig. 2 has been mounted to the stator;
Fig. 4 is a diagram showing a principal part of a second embodiment according to the present invention, in which a sensor holding member shown in Fig. 1 is formed of a hollow rubber member, before a bracket is mounted to a stator;
Fig. 5 is a schematic diagram of a principal part showing a state in which the bracket of Fig. 4 has been mounted to the stator;
Fig. 6 is a diagram showing a principal part of a third embodiment according to the present invention, in which a sensor holding member shown in Fig. 1 is formed of a spring structure, before a bracket is mounted to a stator;
Fig. 7 is a schematic diagram of a principal part showing a state in which the bracket of Fig. 6 has been mounted to the stator;
Fig. 8 is a schematic diagram showing the process of attaching a winding overheat protection sensor to a motor in a first previously-proposed example;
Fig. 9 is a diagram showing a state in which the attachment process of Fig. 8 has been completed;
Fig. 10 is a schematic diagram showing the process of attaching a winding overheat protection sensor to a motor in a second previously-proposed example;
Fig. 11 is a diagram showing that a contact fault has occurred between the sensor and a stator winding as a result of the attachment process in the second previously-proposed example of Fig. 10; and
Fig. 12 is a diagram showing how a joint between a bracket and a stator may not be effected as a result of the attachment process in the second previously-proposed example of Fig. 10.

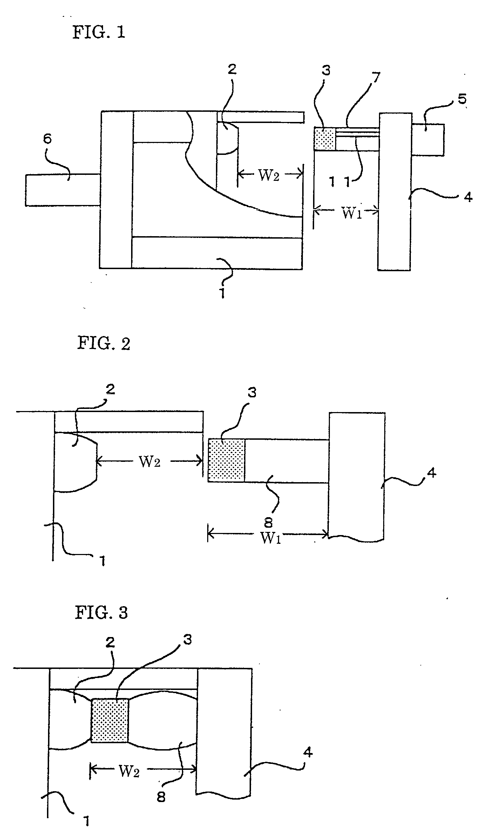

Fig. 1 is a schematic diagram of a motor having a winding overheat protection sensor according to the present invention.

A bracket 4 for covering, or merely over, a stator winding 2 is mounted to one end of a stator 1. A sensor holding member 7 having a winding overheat protection sensor (hereafter referred to simply as "sensor") 3 at its tip is attached to the bracket 4 on a surface thereof that is opposed to the stator 1. The sensor holding member 7 is made of a material that deforms resiliently in its longitudinal direction when it is subjected to force in the longitudinal direction. In Fig. 1, reference numeral 6 denotes a rotor shaft.

The sensor 3 is designed so as to be attached to the sensor holding member 7 in such a position that the sensor necessarily comes in contact with a surface of the stator winding 2 when the bracket 4 is mounted to the stator 1. Even if the position of the stator winding 2 varies more or less, the variation-is absorbed by a variation of the length of the sensor holding member 7 caused by the pressed contact between the stator winding 2 and the sensor 3.

The bracket 4, the sensor holding member 7, the sensor 3, a lead wire 11, and a connector 5 are formed into a module as one body. Therefore, module forming work, such as attachment of the sensor holding member 7 and the sensor 3 to the bracket 4, attachment of the connector 5, and connection between the sensor 3 and the connector 5, can be conducted in a process different from attachment of the motor main body. Finally, the module is mounted to the motor. Therefore, assembly of the motor and the attachment of the sensor are facilitated. In addition, automatic attachment of the sensor 3 and automatic assembling of the motor also become possible.

When the bracket 4 is fixed to the stator 1, the sensor 3 made in one body with the bracket 4 comes into contact with the surface of the stator winding 2,and the sensor 3 is pressed against the surface of the stator winding 2 by resilient force of the sensor holding member 7. A distance W1 between the stator side surface of the bracket 4 and the tip of the sensor 3 is set so as to be sufficiently longer than a distance W2 between a surface of the stator 1 to which the bracket 4 is mounted and the surface of the stator winding 2.

As heretofore described, the position W1 of the sensor 3 is set so as to satisfy the relation W1 > W2 with respect to the surface position W2 of the stator winding 2. When the bracket 4 is mounted to the stator 1, the sensor holding member 7 is subject to resilient deformation and contracts, and the sensor 3 is pressed against the surface of the stator winding 2. An adhesive layer may be formed by applying an adhesive material to the contact surface of the sensor 3 for the stator winding 2, or to the contact surface of the stator winding 2. When the sensor 3 is pressed against the surface of the stator winding 2, they are bonded by the adhesive layer. By doing so, the joint between the surfaces of the sensor 3 and the stator winding 2 does not break away even if the resilient force of the sensor holding member 7 is lowered by use over several years, and consequently the pressed contact force is lowered. As a result, the temperature of the stator winding 2 can be detected by using the sensor 3.

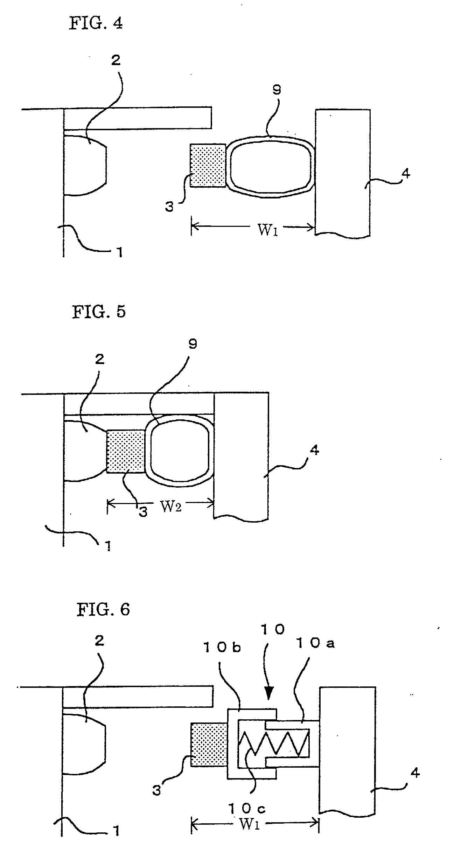

Figs. 2 and 3 are diagrams showing a first embodiment of the present invention, in which the sensor holding member 7 of Fig. 1 is forced of a resilient spongy member 8, which may be elastic in nature. Fig. 2 shows a state before the bracket 4 is mounted to the stator 1. Fig. 3 shows a state after the bracket 4 has been mounted to the stator 1.

In the state where the bracket 4 is mounted to the stator 1, the sensor 3 comes in contact with the surface of the stator winding 2 as shown in Fig. 3, and the spongy member 8 having the sensor 3 attached to its tip is contracted. As a result, a distance W1 (Fig. 2) between the surface of the bracket 4 to which the stator 1 is mounted and the tip of the sensor 3 reduces to W2,which is a distance between a surface of the stator 1 to which the bracket 4 is mounted and the surface of the stator winding 2.

The sensor 3 is pressed against the surface of the stator winding 2 by the resilient expansive force of the contracted spongy member 8. In addition, the sensor 3 and the stator winding 2 are bonded and fixed by an adhesive layer between surfaces of the sensor 3 and the stator winding 2. Even if the spongy member 8 is deteriorated, the sensor 3 is held in the state where it is mounted to the surface of the stator winding 2.

Figs. 4 and 5 are diagrams showing a second embodiment of the present invention, in which the sensor holding member 7 of Fig. 1 is formed of a resilient hollow rubber member 9 which may be elastic in nature. Fig. 4 shows a state before the bracket 4 is mounted to the stator 1. Fig. 5 shows a state after the bracket 4 has been mounted to the stator 1.

In this embodiment as well, the sensor 3 comes in contact with the surface of the stator winding 2 as shown in Fig. 5 when the bracket 4 is mounted to the stator 1. The hollow rubber member 9 having the sensor 3 attached to its tip is deformed. As a result, a distance W1 (Fig. 4) between the surface of the bracket 4 to which the stator 1 is mounted and the tip of the sensor 3 reduces to W2,which is a distance between a surface of the stator 1 to which the bracket 4 is mounted and the surface of the stator winding 2.

The sensor 3 is pressed against the surface of the stator winding 2 by the resilient expansive force of the deformed hollow rubber member 9, and bonded and fixed by an adhesive layer.

Figs. 6 and 7 are diagrams showing a third embodiment of the present invention, in which the sensor holding member 7 of Fig. 1 is formed of a spring structure 10. Fig. 6 shows a state before the bracket 4 is attached to the stator 1. Fig. 7 shows a state after the bracket 4 has been attached to the stator 1.

To be more precise, the spring structure 10 includes a fixed section 10a attached to the bracket 4, a movable section 10b to which a sensor 3 is attached, and a spring 10c disposed between the fixed section 10a and the movable section 10b.

In this embodiment, the spring 10c extends to its full length before the bracket 4 is mounted to the stator 1 as shown in Fig. 6. At this time, a total length of the spring structure 10 and the sensor 3 becomes a maximum length (= W1). On the other hand, when the bracket 4 is mounted to the stator 1, the spring 10c is compressed as shown in Fig. 7, so that the total length of the spring structure 10 and the sensor 3 becomes equal to W2 (< W1) which is a distance between a surface of the stator 1 to which the bracket 4 is mounted and the surface of the stator winding 2.

The sensor 3 is pressed against the surface of the stator winding 2 by the resilient expansive force of the contracted spring 10c, and bonded and fixed by an adhesive layer. Since the elasticity of the spring 10c of the spring structure 10 degrades little, it is not always necessary to form the adhesive layer. Especially, in the case where the bracket 4 is frequently removed, it is desirable to press the sensor 3 against the surface of the stator winding 2 by the spring force alone without bonding the sensor 3 and the stator winding 2 by using an adhesive material.

Although in Figures 2 to 5 the sensor holding member 7 is shown to be made entirely of a resiliently deformable element, it is understood that in alternative embodiments the resiliently deformable element can be just a part of the sensor holding member 7.

## Claims

1. A motor having a winding overheat protection sensor, comprising:
a bracket mounted to a stator of said motor over a stator winding;
a sensor holding member mounted to said bracket, said sensor holding member comprising resiliently deformable material; and
a sensor for stator winding overheat protection attached to a tip of said sensor holding member, such that said sensor is pressed against a surface of said stator winding when said bracket is mounted to said stator.

2. The motor having a winding overheat protection sensor according to claim 1, wherein said bracket, said sensor holding member, and said sensor,are formed into a module as one body.

3. The motor having a winding overheat protection sensor according to claim 1 or 2, wherein
an adhesive layer is formed on a surface of said sensor pressed against said stator winding, and
said sensor and said stator winding are pressed against and bonded to each other by said adhesive layer, when said bracket is mounted to said motor.

4. The motor having a winding overheat protection sensor according to any preceding claim, wherein said sensor holding member comprises a spongy resiliently deformable material.

5. The motor having a winding overheat protection sensor according to claim 1 or 2, wherein said sensor holding member comprises a hollow resiliently deformable rubber member.

6. The motor having a winding overheat protection sensor according to any preceding claim, wherein said sensor holding member is made of said resiliently deformable material.

7. The motor having a winding overheat protection sensor according to any preceding claim, wherein said resiliently deformable material is elastically deformable material.

8. The motor having a winding overheat protection sensor according to claim 1, 2 or 3, wherein said sensor holding member comprises fixed and moveable sections coupled to one another via said resiliently deformable material as provided by a spring.
